# EUROPÄISCHE PATENTSCHRIFT

(11) **EP 3 728 828 B1**
(45) Veröffentlichungstag und Bekanntmachung des Hinweises auf die Patenterteilung: **12.02.2025**
(21) Anmeldenummer: 18815993.3
(22) Anmeldetag: 05.12.2018
(51) Int. Cl.: F02N 11/08, F02N 15/06, H01H 51/06, F02N 11/00, F02N 15/02, F02N 15/04

(54) **STARTVERFAHREN EINER BRENNKRAFTMASCHINE**
STARTING METHOD FOR AN INTERNAL COMBUSTION ENGINE
PROCÉDÉ DE DÉMARRAGE D'UN MOTEUR À COMBUSTION INTERNE

(30) Priorität: 18.12.2017 DE 102017223106
(43) Veröffentlichungstag der Anmeldung: 28.10.2020
(73) Patentinhaber: Robert Bosch GmbH, 70442 Stuttgart (DE)
(72) Erfinder: WANNER, Hartmut, 71083 Herrenberg (DE)
(86) Internationale Anmeldenummer: PCT/EP2018/083598
(87) Internationale Veröffentlichungsnummer: WO 2019/121003

(56) Entgegenhaltungen:
- EP-B1- 2 795 650
- DE-A1- 10 046 987
- DE-A1- 102004 032 373
- DE-A1- 102005 006 248
- DE-A1- 102010 003 485
- DE-A1- 19 814 504
- DE-A1- 2 843 984
- DE-A1- 3 737 430

## Beschreibung

### Stand der Technik

Bei Nutzkraftwagen werden Starter verwendet, die eine verhältnismäßig große Leistung aufweisen. Es gelten hohe Anforderungen an die Lebensdauer von derartigen Startern. Dies bedeutet insbesondere, dass ein Verschleiß am Ritzel bzw. Einrückritzel des Starters und am Zahnkranz der Brennkraftmaschine gering gehalten werden soll bzw. muss. Um dies zu erreichen, werden meist elektrisch zweistufige Einspursysteme verwendet.

Der Grund hierfür ist, dass bei einstufigen Starter-Systemen beim Einspuren des Ritzels in den Zahnkranz ein überwiegender Anteil von sogenannten Zahn-auf-Zahn-Stellungen auftritt, die systembedingt dann mit einer großen axialen Kraft des Einrückrelais, oder sofern verbaut, der dazwischen befindlichen Einspurfeder und in Verbindung mit einem großen Andrehmoment aufgelöst werden. Das große Andrehmoment führt zu einer großen tangentialen Kraft an den Zähnen von Ritzel und Zahnkranz. All dies bedingt einen relativen hohen mechanischen Verschleiß. Aus diesem Grund werden die oben erwähnten zweistufigen Einspursysteme verwendet. Dabei wird beispielsweise während des Vorspurens des Ritzels dieses auch verdreht. Hierzu fließt ein relativ geringer Strom durch den elektrischen Startermotor. In dieser ersten Stufe des Einspurens wird somit die Wahrscheinlichkeit erhöht, dass die Ritzelzähne in die Lücken des Zahnkranzes einspuren können.

Um einen geringen Verschleiß an Ritzel und Zahnkranz zu erreichen und dennoch eine elektrisch und thermisch geeignete und zuverlässige Auslegung erreichen zu können, wird seit Jahren in verschiedenen Startertypen, die von der Robert Bosch GmbH für Nutzfahrzeuge vertrieben werden, eine so genannte Zweikammer-Wicklung eingesetzt. Zu den erwähnten Startertypen gehören die Typen HEF95-L, HXF95-L, HEF 109-M, HEF 109-MP, HEF109-L sowie deren Parallelstarter-Versionen HEP109. Bei diesen Startertypen befindet sich im Einrückrelais eine Wicklungsanordnung, wie sie aus der Offenlegungsschrift der deutschen Patentanmeldung DE 10 2004 032 373 A1 bekannt ist. Die aus diesem Dokument bekannte Wicklungsanordnung ist die von Fachleuten so bezeichnete Zweikammer-Wicklung. Eine Einzugswicklung wird zu Beginn des Startvorgangs bestromt und leitet dabei den so genannten Verdrehstrom während des Einspurvorgangs (erste Stufe) zum Startermotor durch, der dann leicht in Drehung versetzt wird. Mittels eines so genannten Öffnerkontakts wird diese Einzugswicklung dann abgeschaltet, wenn der so genannte Hauptstromschalter - manchmal auch als Kontaktplatte bezeichnet - durch das Fortschreiten des Magnetankers im Einrückrelais vom Öffnerkontakt abgehoben wird. Des Weiteren hat die Zweikammer-Wicklung eine Haltewicklung, welche zwar die eigentlichen magnetischen Einzugskräfte aufbringt, aber nach Abschalten der Einzugswicklung den Magnetanker auch sicher in der Arbeitsstellung hält. Der Hauptteil der magnetischen Einzugskräfte wird von der Haltewicklung erzeugt (ca. 6.000 Amperewindungen), die Magnetkraft der Einzugswicklung ist mit ca. 1000 Amperewindungen vergleichsweise gering.

Gegenüber einer früher gebräuchlichen Wicklungsanordnung mit einer so genannten Mäanderwicklung - man vergleiche beispielsweise mit der deutschen Offenlegungsschrift DE 198 14 504 A1 - weist die Version mit Einzugs- und Haltewicklung zwar deutliche Funktionsvorteile auf, dennoch ist die Haltewicklung weiter optimierbar. So sind die magnetischen Zugkräfte, bedingt durch die Auslegung, begrenzt. Es ist eine Kompromisslösung zwischen maximaler magnetischer Zugkraft und thermischer Stabilität der Wicklung, so dass die maximal zulässige Einschaltdauer begrenzt ist. Eine weitere Optimierung der erreichbaren dynamischen Einspurtiefe bzw. der Temperaturfunktionsgrenze würde mit einer Reduzierung der thermischen Stabilität des Wicklungssystems einhergehen. Die dynamische Einspurtiefe ist dabei die Tiefe, die das Ritzel bzw. Einrückritzel in der Verzahnung des Zahnkranzes bis zum Schließen des Hauptstromschalters erreicht.

Insbesondere dann, wenn bei Startvorrichtungen der Elektromotor für höhere Leistungen vergrößert ist, verlängert sich zwar die mögliche Einschaltdauer des Elektromotors gegenüber weniger leistungsstarken Motoren um z. B. 50 % bis 80 %; allerdings ist die Temperaturbelastbarkeit an unterschiedlichen Brennkraftmaschinen unterschiedlich hoch und kommt daher bei manchen Kombinationen an die Grenzen bzw. stellt die Wicklungsanordnung im Einrückrelais das begrenzende Element dar, so dass deren maximal zulässige Betriebstemperatur erreicht wird.

Aus der Offenlegungsschrift DE 37 37 430 A1 ist eine Startvorrichtung bekannt, die ein Einrückrelais für ein in einen Zahnkranz einzuspurendes Ritzel aufweist. Dieses Einrückrelais weist hierzu drei Wicklungen auf. Eine als Spulenabschnitt bezeichnete Wicklung, welche mit einer Diode in Reihe angeordnet ist, erfährt nach dem Bestromen durch einen Hilfsschalter erst wieder mit einem Schließen eines Hauptstromkontakts eine geänderte anliegende Spannung. Alle drei Wicklungen bestromen somit den sich dadurch bis zu diesem Ereignis drehenden Elektromotor.

Aus der Offenlegungsschrift WO 2013/093365 A1 ist eine Startvorrichtung mit einem Ausführungsbeispiel bekannt, das einen Hubmagneten aufweist, der dazu dient, ein Ritzel in einen Zahnkranz einzuspuren. Durch einen weiteren Hubmagneten wird eine Kontaktplatte durch eine Drehung mit einer Achse senkrecht zur Hubachse des anderen Hubmagneten an einen Zwischenanschluss kontaktiert und dadurch ein Betrag zum Bestromen des Motors zum Antrieb des Zahnkranzes geliefert. EP 2 795 650 B1 beschreibt eine weitere Startvorrichtung für eine Brennkraftmaschine.

Ein Gesichtspunkt der Erfindung ist daher eine Optimierung der Kenngrößen, welche mit den magnetischen Zugkräften im Einrückrelais und der maximal möglichen Einschaltdauer zusammenhängen. Dabei muss berücksichtigt werden, dass das Andrehverhalten des Elektromotors bzw. des Startermotors, d. h. seine Kennlinie beim Anschleppen der Brennkraftmaschine über den Zahnkranz, möglichst sinnvoll ist. Zudem soll der Materialeinsatz optimiert werden, so dass der Aufwand beispielsweise an Kupferdraht für die Wicklungsanordnung möglichst optimiert ist.

### Offenbarung der Erfindung

Gemäß einem ersten Gesichtspunkt ist vorgesehen, dass die für das Verfahren vorgesehene Startvorrichtung mit einem Antriebsritzel zum Einspuren in einen Zahnkranz einer Brennkraftmaschine derart ausgestaltet ist, dass dieses durch einen elektrischen Drehantrieb drehbar und durch einen elektrischen Schubantrieb axial verschiebbar ist. Der elektrische Schubantrieb weist einen Hubmagneten auf, der einen Schubanker hat, der durch eine Kombination von verschiedenen Wicklungen innerhalb dieser Wicklungen bewegbar ist. In diesem Fall sind Einzugswicklungen verbaut, die nur während des Einzugsvorganges bestromt werden. Zudem weist der Schubantrieb eine Haltewicklung auf, durch die der Schubanker in einem eingezogenen Zustand gehalten werden kann. Der Schubantrieb dient auch zum Betätigen einer Schaltvorrichtung, mittels derer der elektrische Drehantrieb einschaltbar ist. Es ist dabei vorgesehen, dass neben der einen, der ersten Einzugswicklung, eine zweite Einzugswicklung vorhanden ist, die zu der ersten Einzugswicklung parallelgeschaltet ist.

In dem Schubantrieb sind somit drei Wicklungen vorhanden. Dies führt dazu, dass für eine erforderliche große Zugkraft für den Einzugsvorgang des Schubankers und das Schieben des Antriebsritzels eine Einzugswicklung und eine Haltewicklung vorhanden sind, die zueinander parallelgeschaltet und gleichsinnig parallel wirkend sind. Während einer ersten Phase im Betrieb der Startvorrichtung fließt der recht hohe Verdrehstrom für den elektrischen Drehantrieb durch eine verhältnismäßig niederohmige Einzugswicklung im Schubantrieb. Weil diese erste Einzugswicklung im Schubantrieb eine verhältnismäßig geringe magnetische Wirkung aufweist, kann diese der Haltewicklung und der anderen, der zweiten Einzugswicklung, mitgekoppelt oder gegengekoppelt geschaltet sein, um die Dynamik des Schubantriebs und damit der Bewegung des Schubankers im Schubantrieb zu beeinflussen und je nach Auslegung zu optimieren. Im weiteren Verlauf des Schubantriebs wird ein Öffnerschalter betätigt, d. h. geöffnet, so dass ein Verdrehstrom nach einem ersten Zeitabschnitt von beispielsweise ca. 50 Millisekunden bis 70 Millisekunden abgeschaltet wird bzw. abgeschaltet werden kann und so eine magnetische Zugkraft auf den Schubanker nur noch von der zweiten Einzugswicklung und der Haltewicklung erzeugt wird bzw. erzeugt werden kann.

Nach einem darauffolgenden zweiten Zeitabschnitt wird durch die Anordnung ermöglicht, dass die zweite Einzugswicklung elektrisch abgeschaltet wird. Dieser zweite Zeitabschnitt dauert beispiels- und typischerweise ca. 10 Millisekunden bis 20 Millisekunden. Das Abschalten der zweiten Einzugswicklung ist faktisch ein Kurzschluss der zweiten Einzugswicklung, da durch das Schließen der Hauptstromkontakte ein Wicklungsanfang der zweiten Einzugswicklung und ein Wicklungsende der zweiten Einzugswicklung auf fast gleichem elektrischen Potential liegen und so zwar ein minimaler Strom durch die zweite Einzugswicklung fließt, dieser aber tatsächlich keinen praktischen Nutzen erzielt. Die zweite Einzugswicklung ist somit magnetisch fast nicht mehr wirksam. Die Haltekraft für den Schubanker wird somit praktisch nur noch von der Haltewicklung erzeugt. Im Vergleich mit bisher bekannten Ausführungen derartiger Schubantriebe bzw. Starterrelais fließt in dieser Situation durch die Haltewicklung jedoch ein deutlich verringerter elektrischer Strom. Dieser kann beispielsweise um ca. 40% abgesenkt sein. Dies ermöglicht in der Folge eine verlängerte maximal mögliche Einschaltdauer des Schubantriebs, da aufgrund des verringerten Stroms auch die Erwärmung des gesamten Schubantriebs deutlich verringert ist. Der Verwender einer derartigen Startvorrichtung hat dadurch die Möglichkeit, das volle thermische Potential des elektrischen Drehantriebs auszuschöpfen.

Für das Abschalten des Schubantriebs gilt als eine Auslegungsbedingung, dass eine Windungszahl der Haltewicklung ungefähr gleich der Windungszahl der zweiten Einzugswicklung ist. Andernfalls lässt sich ein derartiger Schubantrieb zwar einschalten, aber nicht mehr abschalten.

Durch eine Optimierung der verschiedenen Parameter der Wicklungen lässt sich ein Wicklungssystem ermöglichen, das folgende Eigenschaften aufweist:
Verglichen mit bekannten Systemen mit einer Zweikammer-Wicklung ergibt sich mit einem derartig optimierten Schubantrieb eine erhöhte Temperaturgrenze, bei der die Funktion insgesamt zuverlässig erreicht wird. Die Temperaturgrenze lässt sich durch ein derartiges optimiertes System um ca. 10% erhöhen.

Mit diesem neuen System lässt sich eine Einschaltdauer deutlich verlängern, da eine Verlustleistung der Haltewicklung gegenüber bisherigen Systemen mit Zweikammer-Wicklung reduziert ist. Die mögliche verlängerte Einschaltdauer ist je nach Betriebsart bis ca. 60 % länger als bisher. Es kann die bisherige Charakteristik des Verdrehstroms, d. h. beispielsweise die Stromhöhe und die Einschaltdauer während der ersten Stufe, beibehalten werden. Falls derartige Schubantriebe bei bisher bekannten Startvorrichtungen Anwendung finden, bspw. in Kombination mit den bereits bekannten Startvorrichtungen HEF109-M bzw. HEF109-L, wird ein sogenanntes Andrehverhalten und somit eine Lebensdauer der Starter bzw. Startvorrichtungen nicht negativ beeinflusst.

Gegenüber einem bisherigen System mit Zweikammer-Wicklung wird ein sogenanntes KupferEinsatzgewicht um ca. 15% Kupfer reduziert. Das Kupfereinsatzgewicht entspricht der Summe der Kupfermasse in der Haltewicklung und der zweiten Einzugswicklung. Die erste Einzugswicklung ist beispielsweise aus einer speziellen Widerstandslegierung gefertigt und ist daher bei dem Kupfereinsatzgewicht nicht berücksichtigt.

Es ist vorgesehen, dass in einer Einschaltstellung des elektrischen Schubantriebs ein Hauptstromschalter der Schalteinrichtungen geschlossen und der Öffnerschalter der Schalteinrichtung geöffnet ist. Dies hat den Vorteil, dass der elektrische Drehantrieb zwar kurzzeitig während des Geschlossenseins des Öffnerschalters und gleichzeitiger Bestromung von einem nennenswerten Strom durchflossen wird, wodurch der Drehantrieb das Antriebsritzel zum Drehen bringt. Das Drehen des Antriebsritzels ist während dieser Phase nicht zu stark, so dass während des gleichzeitigen Bestromens der Haltewicklung und der zweiten Einzugswicklung der Schubantrieb gleichzeitig das Antriebsritzel zu dem Zahnkranz der Brennkraftmaschine schiebt und im Zusammenwirken der translatorischen und rotatorischen Bewegung des Antriebsritzels mit hoher Wahrscheinlichkeit eine Position gegenüber dem Zahnkranz erreicht wird, sodass ein Zahn der Verzahnung des Antriebsritzels in eine Lücke der Verzahnung des Zahnkranzes eindringt. Dadurch wird letztlich vermieden, dass ein an der Verzahnung des Zahnkranzes anliegendes Antriebsritzel mit hoher Andrehdynamik und infolgedessen mit hoher Drehzahl an der Verzahnung des Zahnkranzes stirnseitig entlang dreht, dabei zwar immer wieder geringfügig mit den Zähnen des Antriebsritzels in die Lücken der Verzahnung des Zahnkranzes eindringt, aber auch immer wieder aus diesen Lücken der Verzahnung des Zahnkranzes herausgedrückt wird. Dieses Herausgedrückt-werden und immer wieder geringfügiges Eindringen in die Verzahnung des Zahnkranzes führt zu geräuschvollem Rattern, welches ein hörbares Zeichen dafür ist, dass sich die Verzahnung des Antriebsritzels und die Verzahnung des Zahnkranzes gegenseitig erheblich verschleißen. Auch wenn dieser Vorgang zum Teil nur Bruchteile von Sekunden andauert, wird über die Nutzungsdauer des Startsystems ein unverhältnismäßig großer Verschleiß erzeugt. Gemäß einem weiteren Aspekt der Vorrichtung ist vorgesehen, dass bei geöffnetem Öffnerschalter der Schalteinrichtung ein Strompfad zur ersten Einzugswicklung geöffnet ist.

Es ist dabei vorgesehen, dass bei geöffnetem Öffnerschalter ein Strompfad durch die zweite Einzugswicklung geschlossen ist. Dies hat den Vorteil, dass bei gleichsinniger Wicklung von Haltewicklung und zweiter Einzugswicklung durch diese beiden Wicklungen das weitere Eindringen des Antriebsritzels in den Zahnkranz der Brennkraftmaschine unterstützt wird.

Gemäß einem weiteren Gesichtspunkt der Erfindung ist vorgesehen, dass die Haltewicklung im gleichen Sinn wie die zweite Einzugswicklung gewickelt ist und die erste Einzugswicklung ebenfalls im gleichen Sinn gewickelt ist, d. h. alle drei Wicklungen sind im gleichen Wicklungssinn gewickelt. Daraus ergibt sich beim Abschalten der ersten Einzugswicklung der Effekt, dass die Summe des gesamten Magnetfelds der drei Wicklungen schwächer wird. Dies hat den Vorteil, dass letztlich die Dynamik dieses Schubantriebs und hier insbesondere des Schubankers an die geänderte Situation angepasst wird. D. h., dass der sich nun in Bewegung befindliche Schubanker nicht mehr aus der vollständigen Trägheit (Ruhezustand) losbewegt werden muss und somit auch mit weniger Schubenergie weiterbewegt werden kann. D. h. zum Beispiel, dass bei einer derartigen Anordnung erreicht wird, dass ein Anschlag des Schubankers am magnetischen Rückschluss des Schubantriebs weniger stark und somit die Geräuscherzeugung geringer ist.

Beim Abschalten der ersten Einzugswicklung, die ca. 15 % des gesamten Flusses ausmachen kann, ergibt sich eine Gegeninduktion in den zwei anderen stromdurchflossenen Spulen Haltewicklung und zweiter Einzugswicklung. Dies bedeutet, dass ein Strom durch die beiden Spulen, Haltewicklung und zweiter Einzugswicklung aufgrund des zusammenbrechenden Magnetfelds in der ersten Einzugswicklung kurzfristig etwas erhöht wird. Weitere Vorteile sind die erhöhte Temperaturfunktionsgrenze, da der magnetische Schubantrieb auch bei hohen Temperaturen der Kupferwicklungen zusätzlich durch die erste Einzugswicklung magnetisch unterstützt wird, allerdings wird dadurch auch die Verdrehzeit des Ritzels verkürzt, wodurch das Einspurverhalten je nach Andrehverhalten des Elektromotorteiles optimiert werden kann.

Gemäß einer weiteren Ausgestaltung der Erfindung ist vorgesehen, dass die erste Einzugswicklung im ungleichen Sinn wie die zweite Einzugswicklung und auch im ungleichen Sinn zur Haltewicklung gewickelt ist. Dies hat den Vorteil, dass durch das sich abbauende Magnetfeld der ersten Einzugswicklung die Bilanz der gesamten magnetischen Durchflutung als Summe der Durchflutung der zweiten Einzugswicklung und Haltewicklung verstärkt, also zusätzlich beschleunigt, nachdem der Verdreh- und Einspurvorgang mit hoher Wahrscheinlichkeit abgeschlossen ist. Je nach Andrehverhalten des Elektromotorteiles kann diese Verschaltung Vorteile in der Abstimmung "Dauer des Einspurvorgangs und nachfolgendem Durchzugsverhalten" bieten.

Bei der Ausführung mit drei Teilwicklungen ist die Aufteilung in etwa so, dass die Haltewicklung ca. 2.800 Amperewindungen aufweist und somit ca. 45% der Einzugskraft und 100% der Haltekraft aufbringt. Die erste Einzugswicklung weist ca. 1.000 Amperewindungen auf und bremst die Einzugsfunktion der zweiten Einzugswicklung und der Haltewicklung in den ersten ca. 70ms um 1.000 Amperewindungen ab und liefert den Verdrehstrom. Die zweite Einzugswicklung weist ca. 3.300 Amperewindungen auf und liefert ca. 55% der Einzugskraft.

Einer der Hauptvorteile, sowohl mit einer ersten Einzugswicklung, die im gleichen Sinn oder im Gegensinn gewickelt ist, ergibt sich dadurch, dass letztlich drei verschiedene Wicklungen bei der Erzeugung der Schubkraft beteiligt sind und letztlich stufenweise abgeschaltet werden. Dieses stufenweise Abschalten führt dazu, dass im Hinblick auf den Bewegungszustand des Schubankers bedarfsgereicht die einzelnen Einzugswicklungen nacheinander ausgeschaltet werden bzw. praktisch wirkungslos sind. Dies ermöglicht letztlich eine an den Bedarf angepasste, insgesamt verringerte Dimensionierung der Haltewicklung, d. h. diese Haltewicklung, welche die Haltekraft während der Durchdrehphase des Verbrennungsmotors erzeugt, benötigt, verglichen mit einer zuvor verwendeten Haltewicklung, weniger als die Hälfte der ursprünglichen Masse, d. h. der Kupfermasse, die bestromt wird. Die dennoch vorgesehene zweite Einzugswicklung kann mit reduzierter Kupfermasse ausgeführt werden, da diese nur kurz während des Einzug Vorgangs bestromt wird. Ein weiterer Gesichtspunkt der Erfindung ist, dass der Schubantrieb einen Spulenträger aufweist, wobei die erste Einzugswicklung in einem ersten ringförmigen Querschnitt eines Wickelvolumens des Spulenträgers angeordnet ist und die zweite Einzugswicklung in einem zweiten ringförmigen Querschnitt eines Wickelvolumens des Spulenträgers angeordnet ist und dabei bevorzugt mit einem Teil des ringförmigen Querschnitts die erste Einzugswicklung umgibt, wobei die Haltewicklung in einem dritten ringförmigen Querschnitt des Wickelvolumens des Spulenträgers angeordnet ist und dabei sowohl die erste Einzugswicklung, als auch die zweite Einzugswicklung umgibt. Dies hat den Vorteil, dass die Wicklung, welche während des gesamten Einspur- und Andrehprozesses der Startvorrichtung am längsten bestromt ist, nach dem effektiven Abschalten der zweiten Einzugswicklung diese als Wärmesenke verwenden kann und gleichzeitig auch noch über das Gehäuse des Schubantriebs Wärme abführen kann.

Weitere Vorteile ergeben sich für das erfindungsgemäße Verfahren. Des Weiteren ergeben sich weitere Vorteile und zweckmäßige Ausführungen der Beschreibung und den Zeichnungen.

Es zeigen:
- Figur 1: eine Längsschnittdarstellung einer Startvorrichtung,
- Figur 2: eine prinzipielle Darstellung eines Längsschnitts eines Spulenträgers des Schubantriebs mit der Lage einer ersten Einzugswicklung, einer zweiten Einzugswicklung und einer Haltewicklung,
- Figur 3: ein erstes Schaltbild der Startvorrichtung aus Figur 1,
- Figur 4: ein zweites Schaltbild eines alternativen Ausführungsbeispiels auf Grundlage des ersten Ausführungsbeispiels.

Gleiche Bezugszeichen bezeichnen gleiche Bauteile.

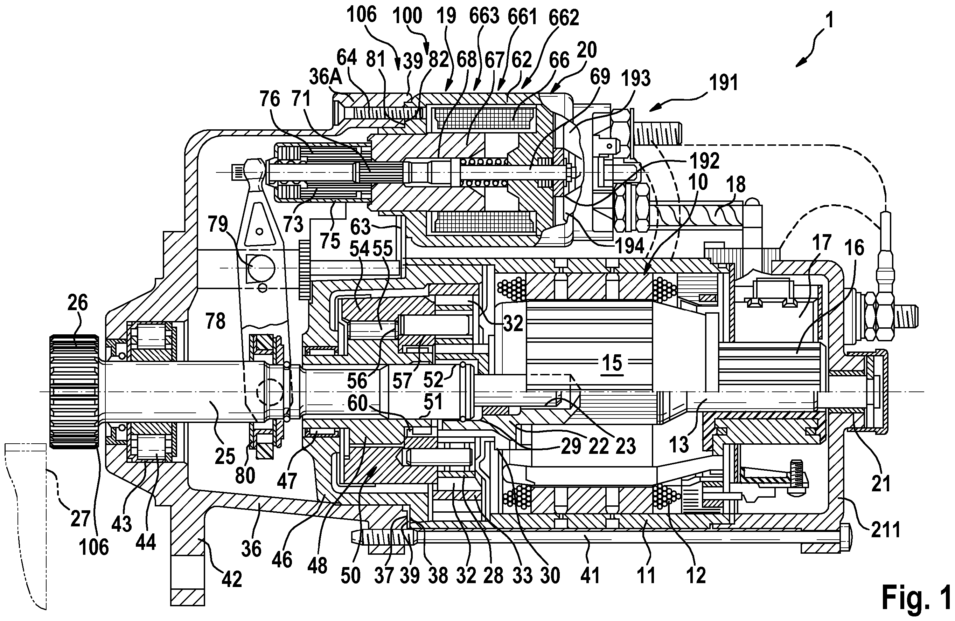

In Figur 1 ist eine Startvorrichtung 1 im Längsschnitt dargestellt. Diese Startvorrichtung 1 hat einen Drehantrieb 10 mit einem Polgehäuse 11. In dem Polgehäuse 11 ist eine Erregerwicklung 12 angeordnet. Der Drehantrieb 10 treibt mit seinem Anker 15 eine Ankerwelle 13 an, die einen Kollektor 16 trägt. An dem Kollektor 16 liegen Gleitkontakte 17 an, die oftmals auch als Kohlebürsten bezeichnet werden. Die Gleitkontakte 17 werden über eine Stromzuführung 18 versorgt bzw. im Betrieb versorgt werden. Oberhalb des Polgehäuses 11 sitzt ein Einrückrelais, das einen Schubantrieb 19 und eine Schaltvorrichtung 191 aufweist. Die Ankerwelle 13 ist mit ihrem kommutator- bzw. kollektorseitigen Ende in einem Kommutatorlager 21 eines Kommutatorlagerdeckels 211 gelagert. An ihrem anderen Ende weist die Ankerwelle 13 eine Konstruktion auf, die als Sonnenrad in das Planetengetriebe mit Rollenfreilauf 50 eingreift. In dieses ragt ein Steilgewinde der Abtriebswelle 25, die an ihrem äußeren anderen Ende ein Antriebsritzel 26 aufweist. Als Variante kann auch ein separates Ritzel über eine Längsverzahnung mit der Antriebswelle 25 verbunden sein. Dieses kann durch entsprechende Verschiebung der Abtriebswelle 25 mit dem Zahnkranz 27 der zu startenden Brennkraftmaschine in Eingriff gebracht werden.

An einem offenen Ende 29 der Ankerwelle 13 findet sich auf ihrer Außenseite eine Längsverzahnung 30, welche ein Sonnenrad eines als Planetenradgetriebe ausgebildeten Vorgelegegetriebes 28 bildet. Dieses Sonnenrad kann auch separat ausgeführt und auf einer Geradverzahnung der Ankerwelle 13 aufgesteckt sein. Mit dem Sonnenrad kämmen Planetenräder 32, die wiederum mit einem feststehenden Hohlrad 33 in Eingriff stehen.

An das Polgehäuse 11 schließt sich in axialer Richtung ein langgestrecktes Antriebslager 36 an, das mit einem Bund 37 an einer Endfläche 38 des Polgehäuses 11 anliegt. Zwischen dem Antriebslager 36 und dem Polgehäuse 11 ist eine Dichtplatte 39 angeordnet. Das Antriebslager 36, das Polgehäuse 11 und das Kollektorlager 21 sind durch Zuganker 41 zusammengehalten. In einem Lagerschild 42 des Antriebslagers 36 ist in einer Bohrung 43 ein Wälzlager 44 für die Abtriebswelle 25 angeordnet. Das Antriebsritzel 6 befindet sich in diesem Ausführungsbeispiel außerhalb des Lagerschilds 42.

Innerhalb des Antriebslagers 36 befindet sich ein Zwischenlager 46, welches in einer mittigen Bohrung ein Wälzlager 47 aufnimmt, in welchem der eine Teil eines buchsenförmigen Innenrings 48 eines Freilaufs 50 gelagert ist. An einer Innenseite des Innenrings 48 ist ein Innensteilgewinde 51 ausgebildet, in welches ein dazu passendes Außensteilgewinde 52 an einem inneren Ende der Abtriebswelle 25 eingreift. Das Außensteilgewinde 52 ist verhältnismäßig lang ausgebildet, sodass auch bei einer großen Verschiebung der Abtriebswelle 25 das Innensteilgewinde 51 und das Außensteilgewinde 52 stets miteinander in Eingriff bleiben.

Zwischen einem Mitnehmer 54 des Freilaufs 50 und dem Innenring 48 befinden sich in üblicher Weise Zylinderrollen 55, die als Klemmkörper auf einer Keilbahn des Innenrings 48 laufen. Der Mitnehmer 54 weist an seiner dem Drehantrieb 10 zugewandten Stirnseite mehrere Sackbohrungen 57 auf, in welche Bolzen 58 eingepresst sind, welche die Planetenräder 32 des Planetengetriebes tragen. Zwischen dem Innenring 48 und dem Außenring, welcher der Mitnehmer 54 ist, befindet sich ein Lager 60, welches als Wälzlager oder Gleitlager ausgebildet sein kann. Die Planetenräder 32 sind ebenfalls mittels nicht weiter bezeichneten Wälzlagern gelagert.

Das Einrückrelais 20 weist ein Gehäuse 62 auf, welches zum Antriebslager 36 hin offen ist. Es weist dort eine ebene Stirnfläche 63 auf, die in diesem Fall in der Ebene der Endfläche 38 des Polgehäuses 11 und des ringförmigen Bundes 37 des Antriebslagers 36 liegt. Das Antriebslager 36 hat im Bereich des Einrückrelais 20 eine flanschartige Gehäuseerweiterung 36A, durch welche mehrere Schrauben 64 hindurchdringen und das Gehäuse 62 des Einrückrelais 20 mit dem Antriebslager 36 fest verbinden. Die Dichtplatte 39 erstreckt sich bis zum Gehäuse 62, liegt an der ebenen Stirnfläche 63 des Gehäuses 62 an und erstreckt sich bis zur Außenseite der Erweiterung 36A des Antriebslagers 36.

Nachfolgend wird auf das Einrückrelais 20 eingegangen. Es hat eine Spulenanordnung 66, die eine Einzugswicklung, die erste Einzugswicklung 661, eine zweite Einzugswicklung 662 und eine sogenannte Haltewicklung 663 aufweist. Innerhalb dieser Spulenanordnung 66 ist ein Schubanker 67 geführt. Dieser Schubanker 67 bzw. Magnetanker hat eine mittige Bohrung 68, in der einerseits ein Schaltbolzen 69 gelagert ist, welcher an seinem aus einem magnetischen Rückschluss herausragenden Ende eine Kontaktplatte der Schaltvorrichtung 191 trägt. In einem Relaisgehäusedeckel 70 sind zwei Kontakte gelagert, die durch die Kontaktplatte 192 miteinander elektrisch leitfähig verbunden werden. Der eine Kontakt ist ein plusseitiger Kontakt 193 und der andere Kontakt ist ein antriebsseitiger Kontakt 194. Achsgleich zum Schaltbolzen 69 ist in der Bohrung 68 des Schubankers 67 ein Druckbolzen 71 fest angeordnet. Dieser ragt in eine verschiebbare, mit einem Längsschlitz versehene Kunststoffhülse 73 hinein. Am außenliegenden Ende des Schubankers 67 ist eine Metallhülse 75 befestigt, in welcher eine Einspurfeder 76 angeordnet ist. Der Druckbolzen 71 wirkt auf einen Einrückhebel 78 ein, welcher in einem gehäusefesten Lager 79 drehbar gelagert ist. Mit seinem anderen Ende ist dieser Einrückhebel 78 mittels einer Vorrichtung 80 an der Abtriebswelle 25 angelenkt. Durch Verschieben des Schubankers 67 wird der Einrückhebel 78 verschwenkt und damit die Abtriebswelle 25 verschoben, wodurch das Antriebsritzel 26 mit dem Zahnkranz 27 in Eingriff gebracht wird.

Wie bereits erwähnt, weist die Startvorrichtung 1 einen elektrischen Schubantrieb 19 auf. Dieser Schubantrieb 19 hat als bisher nicht erwähnte Untereinheit einen sogenannten Hubmagneten, der den Schubanker 67 aufweist und dessen Lage im Hubmagneten 100 durch die Spulenanordnung 66 und hierbei insbesondere durch die erste Einzugswicklung 661, durch die zweite Einzugswicklung 662 und durch die Haltewicklung 663 in seiner Bewegungsdynamik und seiner Ruhelage beeinflusst wird.

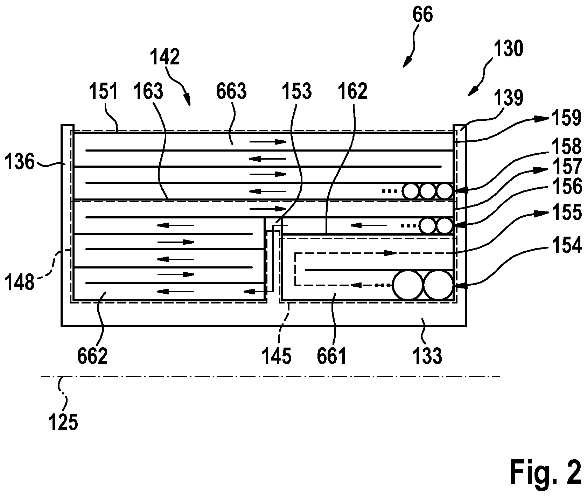

Figur 2 zeigt schematisch und beispielhaft einen Teil eines Längsschnitts der Spulenanordnung 66. Der Schubantrieb 106 trägt in seinem Gehäuse 62 einen Spulenträger 130, um den herum, d. h. um dessen rohrförmigen Abschnitt 133, die drei Wicklungen erste Einzugswicklung 661, zweite Einzugswicklung 662 und Haltewicklung 663 angeordnet sind.

Der Spulenträger 130 hat radial außerhalb des rohrförmigen Abschnitts 133 und zwischen einem Flansch 136 des Spulenträgers an einem Ende des rohrförmigen Abschnitts 133 und einem anderen Flansch 139 des Spulenträgers 130 einen insgesamt ringförmigen Querschnitt, der für ein sogenanntes Wickelvolumen 142 (Gesamtwickelvolumen) steht. Die erste Einzugswicklung 661 ist dabei in einem ersten ringförmigen Volumen des Wickelvolumens 142 angeordnet. Für dieses erste ringförmige Volumen steht in Figur 2 ein Querschnitt 145. Dieser Querschnitt 145 ist ein Querschnitt durch dieses erste ringförmige Volumen. Die zweite Einzugswicklung 662 ist in einem zweiten ringförmigen Volumen, einem Wickelvolumen, für das der ringförmigen Querschnitt 148 steht und der ein Teil des Gesamtwickelvolumens des Spulenträgers 130 ist, angeordnet. Dieses zweite ringförmige Volumen der zweiten Einzugswicklung 662 umgibt dabei bevorzugt mit einem Teil dieses ringförmigen Volumens die erste Einzugswicklung 661. Dieser Fall ist in Figur 2 dargestellt. Das heißt, dass das ringförmige Volumen der zweiten Einzugswicklung 662 bevorzugt eine topfförmige Gestalt aufweist. Diese topfförmige Gestalt weist demnach einen Raum auf, in dem kein Leiter der zweiten Einzugswicklung 662 angeordnet ist. In diesem Raum eingetaucht ist somit die erste Einzugswicklung 661 angeordnet. Die zweite Einzugswicklung 662 umgibt somit mit einem Teil des ringförmigen Volumens die erste Einzugswicklung 661. Die Haltewicklung 663 ist in einem dritten ringförmigen Volumen des Wickelvolumens 142 des Spulenträgers 130 angeordnet. Die Haltewicklung 663 umgibt dabei sowohl die erste Einzugswicklung 661, als auch die zweite Einzugswicklung 662. Für dieses erwähnte dritte ringförmige Volumen steht der Querschnitt 151. Das Wickelvolumen 142 des Spulenträgers 130 setzt sich somit aus den Wickelvolumen der ersten Einzugswicklung 661, der zweiten Einzugswicklung 662 und der Haltewicklung 663 zusammen. Besonders bevorzugt weist der Spulenträger 130 zwischen der ersten Einzugswicklung 661 und der zweiten Einzugswicklung 662 eine ringförmige Wand 153 auf. Es ist dabei auch vorgesehen, dass die Anschlüsse 154, 155 der ersten Einzugswicklung 661 durch den einen Flansch 139 hindurchgeführt sind. Ebenso gilt, dass vorgesehen ist, dass die Anschlüsse 156, 157 der zweiten Einzugswicklung 662 ebenfalls durch den Flansch 139 hindurchgeführt sind. Auch für die Haltewicklung 663 ist vorgesehen, dass Anschlüsse 158, 159 durch den Flansch 139 hindurchgeführt sind. Es treten somit besonders bevorzugt alle Anschlüsse 154 bis 159 durch den einen Flansch 139 hindurch. Unter "Hindurchtreten" durch den Flansch 139 ist gemeint, dass beispielsweise in dem Flansch 139 ein oder mehrere Schlitze eingebracht sind, durch die alle Anschlüsse 154 bis 159 treten. Des Weiteren ist besonders bevorzugt zwischen der Einzugswicklung 661 und der Einzugswicklung 662 eine Isolationsschicht 162 angeordnet. Hierzu ist besonders bevorzugt ein Kunststoffclip aufgebracht oder ein Klebeband auf die erste Isolationsschicht 661 aufgewickelt. Des Weiteren ist besonders bevorzugt zwischen der zweiten Einzugswicklung und der Haltewicklung 663 eine Isolationsschicht 163 angeordnet, d.h. vorzugsweise auf die Einzugswicklung 662 aufgeklebt oder eingelegt.

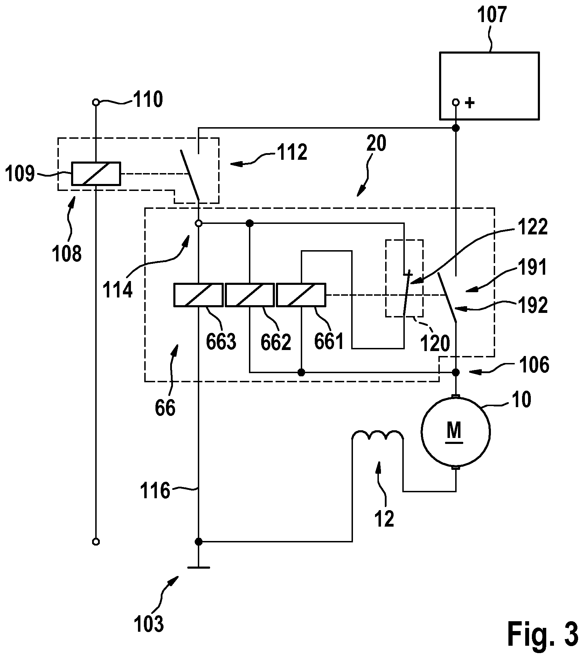

In Figur 3 ist ein Schaltbild der oben erwähnten Startvorrichtung 1 in einem ersten Ausführungsbeispiel dargestellt. Nachfolgend wird die Schaltung näher beschrieben. Der Drehantrieb 10 mit seiner Erregerwicklung 12 ist an einen Minusanschluss 103 angeschlossen. Über einen Plusanschluss 106 und die Schaltvorrichtung 191 kann der Drehantrieb 10 mit einem Pluspol + einer Starterbatterie 107 elektrisch versorgt werden. Hierzu wird die Kontaktplatte 192 der Schaltvorrichtung 191 mit den Kontakten 193 (plusseitiger Kontakt), 194 (antriebsseitiger Kontakt) in Kontakt gebracht, der elektrische Kontakt wird geschlossen. Diese Bestromung über die Kontaktplatte 192 findet aber erst mit der sogenannten zweiten Stufe der Bestromung des Drehantriebs 10 statt.

Zum Schalten der Kontaktplatte 192, die ein Teil des Einrückrelais 20 ist, sind der nachfolgend beschriebene Aufbau und auch das beschriebene Verfahren vorgesehen. Der Aufbau ist dabei wie folgt: Das Einrückrelais 20 weist die bereits erwähnte Spulenanordnung 66 auf mit einer ersten Einzugswicklung 661, einer zweite Einzugswicklung 662 und einer Haltewicklung 663. Alle drei Wicklungen weisen in diesem ersten Ausführungsbeispiel den gleichen Wicklungssinn auf. Das Einrückrelais 20 wird dabei durch ein Vorschaltrelais 108 eingeschaltet. Hierzu erhält ein Schubantrieb 109 über einen Steueranschluss 110 einen Einschaltstrom, der dazu führt, dass eine hier nicht dargestellte Relaisspule des Vorschaltrelais 108 bestromt wird. Dieses Bestromen der Relaisspule des Vorschaltrelais 108 führt dazu, dass ein Vorschaltkontakt 112 geschlossen wird. Dieses Schließen des Vorschaltkontakts 112 führt dazu, dass eine elektrische Verbindung zwischen dem Pluspol + der Starterbatterie 107 und einem Spulenanschluss 114 der Spulenanordnung 66 eine elektrische Verbindung geschaltet wird. Durch die Bestromung des Spulenanschlusses 114 bzw. durch die Unter-Spannung-Setzung dieses Spulenanschlusses 114 mit der Betriebsspannung des Pluspols + der Starterbatterie 107 wird sowohl die Haltewicklung 663 bestromt, als auch die zweite Einzugswicklung 662 und auch die erste Einzugswicklung 661. Dabei ist die Haltewicklung 663 von dem Spulenanschluss 114 direkt bestromt. Über eine Masseverbindung 116 ist die Haltewicklung 663 mit dem Masseanschluss 103 verbunden. Von dem Spulenanschluss 114 ausgehend wird die zweite Einzugswicklung 662 bestromt. Minusseitig ist die zweite Einzugswicklung 662 elektrisch mit dem Plusanschluss 106 des Drehantriebs 10 verbunden, sodass minusseitig der durch die Einzugswicklung 662 fließende Strom über den Drehantrieb 10 und die Erregerwicklung 12 zum Masseanschluss 103 geführt wird. Von dem Spulenanschluss 114 geht auch eine elektrische Verbindung zu der ersten Einzugswicklung 661. Diese elektrische Verbindung verläuft jedoch zunächst über einen Öffnerschalter 120, der unter anderem im Moment des Einschaltens des Einrückrelais 20 durch den Vorschaltkontakt 112 bzw. das Vorschaltrelais 108 geschlossen ist.

Minusseitig wird der Strom, welcher durch die erste Einzugswicklung 661 fließt, ebenfalls in Richtung zum Plusanschluss 106 abgeführt. Das heißt, dass mit dem Schließen des Vorschaltkontakts 112 in einer ersten Zeitdauer die erste Einzugswicklung 661 über den Öffnerschalter 120 bestromt wird, in dieser ersten Zeitdauer auch die zweite Einzugswicklung 662 und über diese erste Zeitdauer auch die Haltewicklung 663. In dieser ersten Zeitdauer wird somit in der Spulenanordnung 66 ein Magnetfeld aufgebaut, welches dazu führt, dass der Schubanker 67 des Schubantriebs 19 beginnt in die Spulenanordnung 66 hineingezogen zu werden. Dadurch wird der Schaltbolzen 69 betätigt, d. h. in diesem Fall wird der Schaltbolzen 69 durch den Schubanker 67 teilweise aus der Spulenanordnung 66 herausgedrückt. Bis zum Ende dieser ersten Zeitdauer ist der Öffnerschalter 120 noch geschlossen. Während dieser Zeitdauer wird der Drehantrieb 10 vor allem durch die erste Einzugswicklung 661 nennenswert bestromt, sodass während dieser ersten Zeitdauer der Drehantrieb 10 beginnt mit einer geringen Leistung zu drehen und so das Antriebsritzel 26 in Drehung versetzt. Da über den Einrückhebel 78 bereits ein Schieben des Antriebsritzels 26 zum Zahnkranz 27 der Brennkraftmaschine erfolgt, bewegt sich somit das Antriebsritzel 26 mit sehr geringer Drehzahl verdrehend vor der Verzahnung des Zahnkranzes 27. Mit dem Ende der ersten Zeitdauer wird der Öffnerschalter 120 geöffnet. Besonders bevorzugt ist dabei, dass eine Rückseite der Kontaktplatte 192 während der ersten Zeitdauer den Öffnerschalter 120 geschlossen hält. Dabei kann beispielsweise die elektrisch leitfähige Rückseite und damit die Kontaktplatte 192 gleichzeitig ein Öffnerkontakt 122 sein. Diese erste Zeitdauer kann dabei beispielsweise ab dem Beginn der Bestromung des Spulenanschlusses 114 beispielsweise zwischen 30 und 50 Millisekunden dauern. Es dauert dann in diesem Beispiel insbesondere weitere 10 bis 20 Millisekunden, bis die Kontaktplatte 192 mit dem plusseitigen Kontakt 193 und dem antriebsseitigen Kontakt 194 einen geschlossenen elektrischen Kontakt bildet. Während dieser zweiten Zeitdauer wird der Schubanker 67 weiter in die Spulenanordnung 66 hineingezogen und das Antriebsritzel 26 steht entweder weiter an der Stirnfläche der Verzahnung des Zahnkranzes 27 an oder rückte, falls eine Zahnlücke in der Verzahnung des Zahnkranzes 27 "gefunden" wurde, bereits mit einer unbestimmten Einrücktiefe in den Zahnkranz 27 ein.

Während der zweiten Zeitdauer und damit zu Beginn dieser zweiten Zeitdauer wird das Magnetfeld der Einzugswicklung 661 abgebaut. Dieses Magnetfeld der ersten Einzugswicklung 661 hat während der ersten Zeitdauer ungefähr einen Anteil von ca. 15% am Gesamtfluss der Spulenanordnung 66. Durch das Abschalten der ersten Einzugswicklung ergibt sich eine Gegeninduktion in den beiden anderen stromdurchflossenen Spulen zweite Einzugswicklung 662 und Haltewicklung 663. Dies führt dazu, dass der Strom durch die beiden Spulen zweite Einzugswicklung 662 und Haltewicklung 663 für kurze Zeit etwas erhöht wird. An die zweite Zeitdauer schließt sich eine dritte Zeitdauer an, die mit dem Moment beginnt, in dem der elektrische Kontakt mittels der Kontaktplatte 192 geschlossen ist. Ab diesem Moment ist die zweite Einzugswicklung 662 praktisch kurzgeschlossen. Dies liegt daran, dass zwischen dem Pluspol + der Starterbatterie 107 und dem Plusanschluss 106 praktisch nahezu keine Spannungsdifferenz anliegt und somit plusseitig die zweite Einzugswicklung 662 und minusseitig die zweite Einzugswicklung 662 nahezu die gleiche Spannung anliegen hat. Selbst wenn die Spannung eine minimale Differenz aufweisen sollte, führt dies dazu, dass der tatsächliche elektromagnetische Fluss durch die zweite Einzugswicklung 662 nicht mehr nennenswert ist und somit keinen Beitrag für das weitere Fortbewegen des Schubankers 67 hat. Ab dem Schließen der Schaltvorrichtung 191 ist alleinig der Magnetfluss bzw. das Magnetfeld der Haltewicklung 663 für die weitere Einzugskraft des Schubankers 67 in die Spulenanordnung 66 wesentlich.

Es ist somit eine Startvorrichtung 1 für eine Brennkraftmaschine offenbart, mit einem Antriebsritzel 26 zum Einspuren in einen Zahnkranz 27 der Brennkraftmaschine, mit einem elektrischen Drehantrieb 10 und einem elektrischen Schubantrieb 19, wobei der Drehantrieb 10 zum Drehen des Antriebsritzels 26 und der Schubantrieb 19 zum Schieben des Antriebsritzels 26 dient, und der elektrische Schubantrieb 19 einen Hubmagneten 100 aufweist, der einen Schubanker 67 hat, der durch eine Einzugswicklung 661 innerhalb der Einzugswicklung 661 entlang einer Schubankerachse 125 bewegt werden kann. Der Hubmagnet 100 hat des Weiteren eine Haltewicklung 663, durch die der Schubanker 67 in eingezogenem Zustand gehalten werden kann, wobei der Schubantrieb 19 auch zum Betätigen einer Schaltvorrichtung 191 dient, mittels derer der elektrische Drehantrieb 10 in eine zweite Antriebsstufe einschaltbar ist. Die zweite Antriebsstufe des Drehantriebs 10 beginnt dann, wenn die Kontaktplatte 192 den elektrischen Kontakt mit dem plusseitigen Kontakt 193 und dem antriebsseitigen Kontakt 194 geschlossen hat. Zu der einen, der ersten Einzugswicklung 661, ist eine zweite Einzugswicklung 662 vorhanden, die zu der ersten Einzugswicklung 661 parallelgeschaltet ist. Die erste Einzugswicklung 661 kann durch einen Öffnerschalter 120 abgeschaltet werden, während ein Strompfad durch die zweite Einzugswicklung 662 geschlossen ist.

Es ist dabei vorgesehen, dass in einer Einschaltstellung des elektrischen Schubantriebs 19 die Schaltvorrichtung 191 geschlossen und der Öffnerschalter 120 der Schaltvorrichtung 191 geöffnet ist. Dies ist während der zweiten Zeitdauer der Fall. Es ist demnach bei geöffnetem Öffnerschalter 120 der Schaltvorrichtung 191 ein Strompfad zur ersten Einzugswicklung 661 geöffnet. Dabei ist vorgesehen, dass bei geöffnetem Öffnerschalter ein Strompfad durch die zweite Einzugswicklung 662 geschlossen ist. Im ersten Ausführungsbeispiel ist die Haltewicklung 663 im gleichen Sinn wie die zweite Einzugswicklung 662 gewickelt und die erste Einzugswicklung 661 ist im gleichen Sinn wie die zweite Einzugswicklung 662 gewickelt. Des Weiteren ist durch einen Vorschaltkontakt 112 ein Strompfad durch die erste Einzugswicklung 661 und ein Strompfad durch die zweite Einzugswicklung 662 geschlossen bzw. kann durch einen Vorschaltkontakt 112 geschlossen werden. Die Haltewicklung 663, die erste Einzugswicklung 661 und die zweite Einzugswicklung 662 sind zueinander parallelgeschaltet.

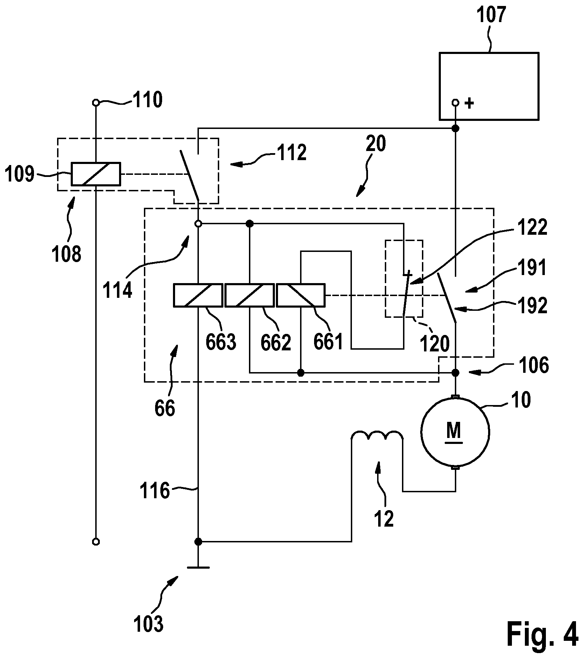

In Figur 4 ist eine Verschaltung einer Startvorrichtung 1 dargestellt, die sich von der Verschaltung nach Figur 3 lediglich darin unterscheidet, dass die erste Einzugswicklung 661 einen anderen Wicklungssinn als die zweite Einzugswicklung 662 und die Haltewicklung 663 aufweist. Alle weiteren Einzelheiten entsprechen denen, wie sie in der Figur 3 dargestellt und hierzu beschrieben sind. Zu erwähnen ist jedoch, dass durch die damit einhergehende Gegenkopplung der ersten Einzugswicklung 661 gegen die beiden anderen Wicklungen Einzugswicklung 662 und Haltewicklung 663 deren Feld geschwächt wird. Hier dauert es beispielsweise 50 bis 70 Millisekunden (also länger als in Ausführungsform der Figur 3), bis der Öffnerkontakt 122 geöffnet wird. Nach diesem Öffnen dauert es weitere ca. 10 bis 20 Millisekunden, bis die Schaltvorrichtung 191 durch die Kontaktplatte 192 geschlossen wird. Im Zusammenhang mit dem oben Beschriebenen ist somit auch ein Verfahren zum Betrieb einer Startvorrichtung 1 für Brennkraftmaschinen vorgesehen, wobei ein Antriebsritzel 26 zum Einspuren in einen Zahnkranz 27 der Brennkraftmaschine vorgesehen ist.

Bei diesem Verfahren werden der elektrische Drehantrieb 10 und der elektrische Schubantrieb 19 verwendet, wobei der Drehantrieb 10 zum Drehen des Antriebsritzels 26 dient und der Schubantrieb 19 zum Schieben des Antriebsritzels 26 dient. Der elektrische Schubantrieb 19 weist einen Hubmagneten 100 auf, der einen Schubanker 67 hat, welcher durch eine Einzugswicklung 661 innerhalb der Einzugswicklung 661 bewegbar ist. Der Hubmagnet 100 hat des Weiteren eine Haltewicklung 663, durch die der Schubanker 67 in eingezogenem Zustand gehalten wird, wobei der Schubantrieb 19 auch zum Betätigen einer Schaltvorrichtung 191 dient, mittels derer der elektrische Drehantrieb 10 eingeschaltet wird. Nach dem Einschalten der Startvorrichtung 1 werden die Haltewicklung 663, die zweite Einzugswicklung 662 und die zu dieser magnetisch gegenparallel geschaltete erste Einzugswicklung 661 eingeschaltet und danach die erste Einzugswicklung 661 durch einen Öffnerschalter 120 abgeschaltet, während ein Strompfad durch die zweite Einzugswicklung 662 geschlossen bleibt. Das Verfahren sieht dabei insbesondere vor, dass der elektrische Drehantrieb 10 über die zweite Einzugswicklung 662 und deren innewohnenden elektrischen Widerstand bestromt wird und dadurch ein Antriebsritzel 26 antreibt.

Zudem ist bei dem Verfahren insbesondere vorgesehen, dass durch das Einschalten und Bestromen der Haltewicklung 663, der ersten Einzugswicklung 661 und der zweiten Einzugswicklung 662 der Schubanker 67 bewegt und dadurch ein Öffnerschalter 120 geöffnet wird. Es ist dabei insbesondere vorgesehen, dass durch das Öffnen des Öffnerschalters 120 ein Strompfad durch die erste Einzugswicklung 661 geöffnet wird. Es ist bevorzugt vorgesehen, dass bei dem Verfahren Schaltvorrichtung 191 geschlossen wird und dadurch ein drehantriebsseitiger Anschluss der zweiten Einzugswicklung 662 mit einem positiven Spannungspotential einer Starterbatterie direkt verbunden wird.

Grundsätzlich versteht sich, dass ein Vorschaltrelais 108 auch als elektronischer Schalter mit entsprechender Funktionalität unter Verwendung eines Halbleitermaterials ausgebildet sein kann. Somit wäre das Vorschaltrelais 108 als Ersatzschaltelement zu sehen, dass die beschriebenen Eigenschaften des Vorschaltrelais 108 aufweist. Dies gilt gleichermaßen auch für die Schaltvorrichtung 191 und den Öffnerschalter, die nach dem Durchschalten (Einschalten der Spulenanordnung 66) des Vorschaltrelais-Ersatzschalters oder des Vorschaltrelais 108 und nach einer vorgesehenen Zeit (Zeitglied oder Rechnerschalteinheit) mittels eines elektronischen Ersatzschalters (Halbleiterschalter) als Öffnerschalter 120 die erste Einzugswicklung 661 bestromt. Danach kann ein elektronischer Ersatzschalter (Halbleiterschalter) als Schaltvorrichtung 191 nach einer vorgesehenen Zeit geschaltet werden, um eine Stromleitung vom Pluspol + der Batterie 107 zum Plusanschluss 106 des Drehantriebs 10 durchzuschalten.

## Patentansprüche

1. Verfahren zum Betrieb einer Startvorrichtung (1) für Brennkraftmaschinen, mit einem Antriebsritzel (26) zum Einspuren in einen Zahnkranz (27) der Brennkraftmaschine, mit einem elektrischen Drehantrieb (10) und einem elektrischen Schubantrieb (19), wobei der Drehantrieb (10) zum Drehen des Antriebsritzels (26) und der Schubantrieb (19) zum Schieben eines Ritzels (26) dient und
- der elektrische Schubantrieb (19) einen Hubmagnet (100) aufweist,
- wobei der eine Schubantrieb (19) eine Spulenanordnung (66) mit einer ersten Einzugswicklung (661), mit einer zweiten Einzugswicklung (662) und mit einer Haltewicklung (663) aufweist,
- wobei der Schubantrieb (19) einen Schubanker (67) hat, der durch die Einzugswicklung (661) innerhalb der Einzugswicklung (661) entlang einer Schubankerachse (125) bewegt wird, und
- mit der Haltewicklung (663) der Schubanker (67) in eingezogenem Zustand gehalten wird,
- wobei der eine Schubantrieb (19) auch zum Betätigen einer Schaltvorrichtung (191) dient,
- mittels derer der elektrische Drehantrieb (10) in eine zweite Antriebsstufe einschaltbar ist,
- wobei neben der einen, der ersten Einzugswicklung (661), die zweite Einzugswicklung (662) vorhanden ist, die zur ersten Einzugswicklung (661) parallelgeschaltet ist,
- wobei während einer ersten Zeitdauer die erste Einzugswicklung (661), die zweite Einzugswicklung (662) und die Haltewicklung (663) bestromt sind,
- wobei die erste Einzugswicklung (661) durch einen Öffnerschalter (120) abgeschaltet wird, während ein Strompfad durch eine zweite Einzugswicklung (662) geschlossen ist,
- indem mit dem Ende der ersten Zeitdauer der Öffnerschalter (120) geöffnet wird,
- während einer darauffolgenden zweiten Zeitdauer in einer Einschaltstellung des elektrischen Schubantriebs (19) die Schaltvorrichtung (191) geschlossen wird und der Öffnerschalter (120) der Schaltvorrichtung (191) geöffnet ist und
- sich an die zweite Zeitdauer eine dritte Zeitdauer anschließt, die mit dem Moment beginnt, in dem der elektrische Kontakt mittels der Kontaktplatte (192) geschlossen wird.

2. Verfahren nach Anspruch 1, **dadurch gekennzeichnet, dass** bei geöffnetem Öffnerschalter (120) der Schaltvorrichtung (191) ein Strompfad zur ersten Einzugswicklung (661) geöffnet ist.

3. Verfahren nach Anspruch 2, **dadurch gekennzeichnet, dass** bei geöffnetem Öffnerschalter (120) ein Strompfad durch die zweite Einzugswicklung 662 geschlossen ist.

4. Verfahren nach einem der vorstehenden Ansprüche, **dadurch gekennzeichnet, dass** die Haltewicklung (663) im gleichen Sinn wie die zweite Einzugswicklung (662) gewickelt ist und die erste Einzugswicklung (661) entweder im gleichen Sinn oder im ungleichen Sinn wie die zweite Einzugswicklung (662) gewickelt ist.

5. Verfahren nach einem der vorstehenden Ansprüche, **dadurch gekennzeichnet, dass** durch einen Vorschaltkontakt (112) ein Strompfad durch die Haltewicklung (663), ein Strompfad durch die erste Einzugswicklung (661) und ein Strompfad durch die zweite Einzugswicklung (662) geschlossen wird.

6. Verfahren n nach einem der vorstehenden Ansprüche, **dadurch gekennzeichnet, dass** die Haltewicklung (663), die erste Einzugswicklung (661) und die zweite Einzugswicklung (662) zueinander parallelgeschaltet sind.

7. Verfahren nach einem der vorstehenden Ansprüche, **dadurch gekennzeichnet, dass** der Schubantrieb (19) einen Spulenträger (130) aufweist, wobei die erste Einzugswicklung (661) in einem ersten ringförmigen Volumen eines Wickelvolumens (142) des Spulenträgers (130) angeordnet ist, wobei die zweite Einzugswicklung (662) in einem zweiten ringförmigen Volumen des Wickelvolumens (142) des Spulenträgers (130) angeordnet ist - und dabei bevorzugt mit einem Teil des ringförmigen Volumens die erste Einzugswicklung (661) umgibt - wobei die Haltewicklung (663) in einem dritten ringförmigen Volumen des Wickelvolumens (142) des Spulenträgers (130) angeordnet ist und dabei sowohl die erste Einzugswicklung (661) als auch die zweite Einzugswicklung (662) umgibt.

8. Verfahren nach einem der vorstehenden Ansprüche, **dadurch gekennzeichnet, dass** der elektrische Drehantrieb (10) über die zweite Einzugswicklung (662) und deren innewohnenden elektrischen Widerstand bestromt wird und dadurch ein Antriebsritzel (26) antreibt.

## Claims

1. Method for operating a starting device (1) for internal combustion engines, the starting device having a drive pinion (26) for engaging into a toothed ring (27) of the internal combustion engine, having an electric rotary drive (10) and an electric thrust drive (19), wherein the rotary drive (10) serves to turn the drive pinion (26) and the thrust drive (19) serves to push a pinion (26) and
- the electric thrust drive (19) has a solenoid (100),
- wherein the one thrust drive (19) has a coil assembly (66) having a first pull-in winding (661), having a second pull-in winding (662) and having a holding winding (663),
- wherein the thrust drive (19) has a thrust armature (67), which is moved along a thrust armature axis (125) within the pull-in winding (661) by the pull-in winding (661), and
- the thrust armature (67) is kept in the retracted position by the holding winding (663),
- wherein the one thrust drive (19) also serves to actuate a switching device (191),
- by means of which the electric rotary drive (10) can be switched to a second drive stage,
- wherein, in addition to the one, the first, pull-in winding (661), the second pull-in winding (662) is present, which is connected in parallel to the first pull-in winding (661),
- wherein the first pull-in winding (661), the second pull-in winding (662) and the holding winding (663) are energized for a first period of time,
- wherein the first pull-in winding (661) is switched off by a normally closed switch (120), whereas a current path through a second pull-in winding (662) is closed,
- by way of the normally closed switch (120) being opened at the end of the first period of time,
- the switching device (191) is closed and the normally closed switch (120) of the switching device (191) is open during a subsequent second period of time in a switch-on position of the electric thrust drive (19), and
- the second period of time is followed by a third period of time which starts at the moment at which the electrical contact is closed by means of the contact plate (192).

2. Method according to Claim 1, **characterized in that** a current path to the first pull-in winding (661) is open when the normally closed switch (120) of the switching device (191) is open.

3. Method according to Claim 2, **characterized in that** a current path through the second pull-in winding (662) is closed when the normally closed switch (120) is open.

4. Method according to any of the preceding claims, **characterized in that** the holding winding (663) is wound in the same sense as the second pull-in winding (662) and the first pull-in winding (661) is wound either in the same sense as or in a different sense from the second pull-in winding (662).

5. Method according to any of the preceding claims, **characterized in that** a current path through the holding winding (663), a current path through the first pull-in winding (661) and a current path through the second pull-in winding (662) are closed by a series contact (112).

6. Method according to any of the preceding claims, **characterized in that** the holding winding (663), the first pull-in winding (661) and the second pull-in winding (662) are connected in parallel to each other.

7. Method according to any of the preceding claims, **characterized in that** the thrust drive (19) has a coil carrier (130), wherein the first pull-in winding (661) is arranged in a first annular volume of a winding volume (142) of the coil carrier (130), wherein the second pull-in winding (662) is arranged in a second annular volume of the winding volume (142) of the coil carrier (130) - and here preferably surrounds the first pull-in winding (661) with a portion of the annular volume -, wherein the holding winding (663) is arranged in a third annular volume of the winding volume (142) of the coil carrier (130) and in so doing surrounds both the first pull-in winding (661) and the second pull-in winding (662).

8. Method according to any of the preceding claims, **characterized in that** the electric rotary drive (10) is energized via the second pull-in winding (662) and its inherent electrical resistance and thereby drives a drive pinion (26).

## Revendications

1. Procédé permettant de faire fonctionner un dispositif de démarrage (1) pour moteurs à combustion interne, comprenant un pignon d'entraînement (26) pour s'engager dans une couronne dentée (27) du moteur à combustion interne, un entraînement rotatif électrique (10) et un entraînement linéaire électrique (19), dans lequel l'entraînement rotatif (10) sert à faire tourner le pignon d'entraînement (26) et l'entraînement linéaire (19) sert à pousser un pignon (26), et
- l'entraînement linéaire électrique (19) présente un aimant de levage (100),
- dans lequel ledit un entraînement linéaire (19) présente un agencement de bobine (66) pourvu d'un premier enroulement d'appel (661), d'un deuxième enroulement d'appel (662) et d'un enroulement de maintien (663),
- dans lequel l'entraînement linéaire (19) présente un induit à déplacement (67) qui est déplacé par l'enroulement d'appel (661) à l'intérieur de l'enroulement d'appel (661) le long d'un axe d'induit à déplacement (125), et
- l'induit à déplacement (67) est maintenu à l'état rentré par l'enroulement de maintien (663),
- dans lequel ledit un entraînement linéaire (19) sert aussi à actionner un dispositif de commutation (191),
- au moyen duquel l'entraînement rotatif électrique (10) peut être commuté sur un deuxième niveau d'entraînement,
- dans lequel en plus dudit un, du premier, enroulement d'appel (661), le deuxième enroulement d'appel (662) est présent qui est monté en parallèle avec le premier enroulement d'appel (661),
- dans lequel pendant une première durée, le premier enroulement d'appel (661), le deuxième enroulement d'appel (662) et l'enroulement de maintien (663) sont alimentés en courant,
- dans lequel le premier enroulement d'appel (661) est désactivé par un commutateur à ouverture (120) pendant qu'un trajet de courant est fermé par un deuxième enroulement d'appel (662),
- en ce que le commutateur à ouverture (120) est ouvert à la fin de la première durée,
- pendant une deuxième durée consécutive, dans une position d'activation de l'entraînement linéaire électrique (19), le dispositif de commutation (191) est fermé, et le commutateur à ouverture (120) du dispositif de commutation (191) est ouvert, et
- la deuxième durée est suivie d'une troisième durée qui commence à l'instant où le contact électrique est fermé au moyen de la plaque de contact (192).

2. Procédé selon la revendication 1, **caractérisé en ce qu'**un trajet de courant jusqu'au premier enroulement d'appel (661) est ouvert lorsque le commutateur à ouverture (120) du dispositif de commutation (191) est ouvert.

3. Procédé selon la revendication 2, **caractérisé en ce qu'**un trajet de courant à travers le deuxième enroulement d'appel (662) est fermé lorsque le commutateur à ouverture (120) est fermé.

4. Procédé selon l'une quelconque des revendications précédentes, **caractérisé en ce que** l'enroulement de maintien (663) est enroulé dans le même sens que le deuxième enroulement d'appel (662), et le premier enroulement d'appel (661) est enroulé dans le même sens ou dans un autre sens que le deuxième enroulement d'appel (662).

5. Procédé selon l'une quelconque des revendications précédentes, **caractérisé en ce qu'**un contact en série (112) ferme un trajet de courant à travers l'enroulement de maintien (663), un trajet de courant à travers le premier enroulement d'appel (661) et un trajet de courant à travers le deuxième enroulement d'appel (662).

6. Procédé selon l'une quelconque des revendications précédentes, **caractérisé en ce que** l'enroulement de maintien (663), le premier enroulement d'appel (661) et le deuxième enroulement d'appel (662) sont montés en parallèle les uns avec les autres.

7. Procédé selon l'une quelconque des revendications précédentes, **caractérisé en ce que** l'entraînement linéaire (19) présente un porte-bobine (130), dans lequel le premier enroulement d'appel (661) est disposé dans un premier volume annulaire d'un volume d'enroulement (142) du porte-bobine (130), dans lequel le deuxième enroulement d'appel (662) est disposé dans un deuxième volume annulaire du volume d'enroulement (142) du porte-bobine (130) - tout en entourant de préférence le premier enroulement d'appel (661) avec une partie du volume annulaire -dans lequel l'enroulement de maintien (663) est disposé dans un troisième volume annulaire du volume d'enroulement (142) du porte-bobine (130), tout en entourant à la fois le premier enroulement d'appel (661) et le deuxième enroulement d'appel (662).

8. Procédé selon l'une quelconque des revendications précédentes, **caractérisé en ce que** l'entraînement rotatif électrique (10) est alimenté en courant par le deuxième enroulement d'appel (662) et sa résistance électrique interne et entraîne ainsi un pignon d'entraînement (26).
